(19) Europäisches Patentamt
European Patent Office
Office européen des brevets

(11) EP 4 746 406 A1

(12) EUROPEAN PATENT APPLICATION
published in accordance with Art. 153(4) EPC

(43) Date of publication:
20.05.2026 Bulletin 2026/21

(51) International Patent Classification (IPC):
H04N 19/132 (2014.01)   H04N 19/20 (2014.01)
H04N 19/167 (2014.01)   H04N 19/70 (2014.01)
H04N 19/30 (2014.01)   H04N 19/85 (2014.01)
H04N 19/117 (2014.01)   H04N 19/105 (2014.01)

(21) Application number: 24840103.6

(22) Date of filing: 10.07.2024

(52) Cooperative Patent Classification (CPC):
H04N 19/105; H04N 19/117; H04N 19/132;
H04N 19/167; H04N 19/20; H04N 19/30;
H04N 19/70; H04N 19/85

(86) International application number:
PCT/KR2024/009895

(87) International publication number:
WO 2025/014293 (16.01.2025 Gazette 2025/03)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 11.07.2023   KR 20230089731
18.09.2023   KR 20230124410
19.01.2024   KR 20240009049
25.01.2024   KR 20240011337

(71) Applicants:
• Electronics and Telecommunications
Research Institute
Daejeon 34129 (KR)

• University Industry Foundation,
Yonsei University Mirae Campus
Wonju-si, Gangwon-do 26493 (KR)

(72) Inventors:
• JUNG, Soon Heung
Daejeon 34129 (KR)
• SEO, Kwang Deok
Wonju-si, Gangwon-do 26493 (KR)
• KIM, A Young
Wonju-si, Gangwon-do 26493 (KR)
• AN, Eunbin
Wonju-si, Gangwon-do 26493 (KR)

(74) Representative: Betten & Resch
Patent- und Rechtsanwälte PartGmbB
Maximiliansplatz 14
80333 München (DE)

(54) IMAGE ENCODING/DECODING METHOD AND DEVICE

(57) An image encoding method according to the present disclosure comprises the steps of: determining a scale coefficient for the current image; scaling the current image according to the scale coefficient; and encoding the scaled image. At this point, a bitstream can include image data obtained by encoding the scaled image, and metadata including spatial resampling information related to the scale coefficient.

【FIG. 1】

**Description**

**[Technical Field]**

The present disclosure relates to a video encoding/decoding method and device.

**[Background Art]**

Conventionally, video encoding/decoding technology has improved video compression efficiency and image quality by considering the human visual system. However, future video encoding/decoding technology is expected to be widely used not only for human vision but also in machine vision fields such as surveillance, intelligent transportation, smart cities, and intelligent industry.

Accordingly, there is a need to develop video encoding/decoding technology by which high-efficiency compression and recognition accuracy can be obtained by simultaneously considering human vision and machine vision.

**[Disclosure]**

**[Technical Problem]**

The present disclosure has been made in view of the above problems, and it is an object of the present disclosure is to provide a method of determining an optimal scale factor that reduces the resolution of an image but does not reduce machine inference task performance.

An object of the present disclosure is to provide a method of encoding/decoding scale factor-related information as metadata.

The technical objects to be achieved by this disclosure are not limited to the technical objects mentioned above, and other technical objects not mentioned can be clearly understood by those skilled in the art from the description below.

**[Technical Solution]**

In accordance with the present disclosure, a video encoding method including determining a scale factor for a current image, scaling the current image according to the scale factor, and encoding the scaled image is provided. Here, bitstream may include image data obtained by encoding the scaled image and metadata including spatial resampling information related to the scale factor.

In the video encoding method according to the present disclosure, the determining a scale factor may include selecting an optimal scale factor from a plurality of scale factor candidates.

In the video encoding method according to the present disclosure, a first rescaled image may be obtained by scaling and rescaling the current image based on a first scale factor candidate among the plurality of scale factor candidates, and whether the first scale factor candidate is available for the current image may be determined based on an object occupancy distribution (OOD) of the first rescaled image.

In the video encoding method according to the present disclosure, the object occupancy distribution may be derived based on filtered detected object information obtained by filtering a plurality of pieces of detected object information obtained from the first rescaled image.

In the video encoding method according to the present disclosure, the filtering may include selecting detected object information having a confidence equal to or greater than a threshold value from among the plurality of pieces of detected object information.

In the video encoding method according to the present disclosure, whether the first scale factor candidate is available for the current image may be determined by comparing a correlation between the object occupancy distribution of the first rescaled image and an object occupancy distribution of an original image or a rescaled image with a threshold value.

In the video encoding method according to the present disclosure, the first rescaled image may be an image obtained by downsampling the original image according to the first scale factor candidate, and then upsampling the downsampled image to a size of the original image.

In the video encoding method according to the present disclosure, when there is a plurality of scale factor candidates available for the current image among the plurality of scale factor candidates, a scale factor candidate having a smallest value among the plurality of available scale factor candidates may be set as the optimal scale factor.

In the video encoding method according to the present disclosure, when there is no scale factor candidate available for the current image among the plurality of scale factor candidates, the scale factor candidate having the smallest value among the plurality of scale factor candidates may be selected as the optimal scale factor.

In the video encoding method according to the present disclosure, the scale factor may be obtained by correcting the optimal scale factor.

In the video encoding method according to the present disclosure, whether the correction is performed may be determined by comparing a quality score for the rescaled image with a reference value.

In the video encoding method according to the present disclosure, the spatial resampling information may include a flag, indicating whether an image encoded is scaled, encoded at a sequence level.

In the video encoding method according to the present disclosure, when the flag is encoded into a value indicating that image scaling has been performed, information indicating a scale factor of each picture may be encoded at a picture level.

In accordance with another aspect of the present disclosure, there is provided a video decoding method including decoding a current image from a bitstream, and determining whether to perform upscaling on the decoded image based on spatial resampling information decoded from the bitstream. Here, the decoded image may be upsampled based on a scale factor for the current image upon determining that upscaling is performed on the decoded image.

In the video decoding method according to the present disclosure, the spatial resampling information may include a flag, indicating whether to scale an image, decoded at a sequence level.

In the video encoding method according to the present disclosure, when the flag indicates that image scaling is performed, information indicating the scale factor of the current image may be decoded at a picture level.

According to the present disclosure, a computer-readable recording medium on which instructions for performing the video encoding method or the video decoding method are recorded can be provided.

Additionally, according to the present disclosure, a computer-readable recording medium that stores data generated by the video encoding method can be provided.

**[Advantageous Effects]**

According to the present disclosure, there is an effect of improving compression efficiency by reducing the resolution of an image without reducing machine inference task performance by providing a method of determining an optimal scale factor.

According to the present disclosure, there is an effect of efficiently upscaling a decoded image by a decoder by encoding/decoding scale factor-related information as metadata.

**[Description of Drawings]**

FIG. 1 is a block diagram of a video encoder according to an embodiment of the present disclosure.

FIG. 2 is a block diagram of a video decoder according to an embodiment of the present disclosure.

FIG. 3 is a conceptual diagram illustrating adaptive determination of scaling parameters based on OOD through an MI-RPR technique.

FIG. 4 shows a detailed configuration of a spatial resampler 114 for deriving scaling parameters of an image.

FIG. 5 is a flowchart of a process of deriving a scale factor.

FIG. 6 to FIG. 8 show detailed operations of steps shown in FIG. 5.

**[Mode for Invention]**

Since the present disclosure can be modified in various manners and have various embodiments, specific embodiments will be illustrated in the drawings and described in detail in the detailed description. However, this is not intended to limit the present disclosure to specific embodiments and should be understood to include all changes, equivalents, and substitutes included in the spirit and technical scope of the present disclosure. Similar reference numbers in the drawings refer to identical or similar functions across various aspects. The shapes and sizes of elements in the drawings may be exaggerated for clearer explanation. For a detailed description of exemplary embodiments which will be described below, refer to the accompanying drawings which illustrate specific embodiments by way of example. These embodiments will be described in sufficient detail to enable those skilled in the art to practice the embodiments. It should be understood that the various embodiments are different from one another but are not necessarily mutually exclusive. For example, specific shapes, structures and characteristics described herein with respect to one embodiment may be implemented in other embodiments without departing from the spirit and scope of the present disclosure. Additionally, it should be understood that the location or arrangement of an individual component within each disclosed embodiment may be changed without departing from the spirit and scope of the embodiment. Accordingly, the following detailed description is not to be taken in a limiting sense, and the scope of the exemplary embodiments is limited only by the appended claims, along with all equivalents to what those claims assert if properly described.

In the present disclosure, terms such as "first" and "second" may be used to describe various components, but the components should not be limited by the terms. The above terms are used only for the purpose of distinguishing one component from another. For example, a first component may be referred to as a second component, and similarly, the second component may be referred to as the first component without departing from the scope of the present disclosure. The term "and/or" includes a combination of a plurality of related stated items or any of a plurality of related stated items.

When a component of the present disclosure is referred to as being "coupled" or "connected" to another component, it should be understood that the component may be directly coupled or connected to the other component, but another component may be present therebetween. On the other hand, when a component is referred to as being "directly coupled" or "directly connected" to another component, it should be understood that there are no other components therebetween.

The components appearing in the embodiments of the present disclosure are shown independently to represent different characteristic functions, which does not mean that each component is configured as separate hardware or one software component. That is, components are illustrated as separate components for convenience of description, at least two components may be combined to form one component or one component may be divided into a plurality of components to perform functions, and integrated embodiments and separate embodiments of such components are also included in the scope of the present disclosure as long as they do not deviate from the essence of the present disclosure.

The terms used in the present disclosure are only used to describe specific embodiments and are not intended to limit the present disclosure. Singular expressions include plural expressions unless the context clearly dictates otherwise. In the present disclosure, terms such as "comprise" or "have" are intended to specify the presence of stated features, numbers, steps, operations, components, parts or combinations thereof, but do not preclude the presence or addition of one or more other features, numbers, steps, operations, components, parts or combinations. In other words, the description of "comprising" a specific component in the present disclosure does not exclude components other than the component and means that additional components may be included in the scope of the implementation of the present disclosure or the technical idea of the present disclosure.

Some components of the present disclosure may not be essential components that perform essential functions in the present disclosure, but may be merely optional components to improve performance. The present disclosure may be implemented by including only essential components for implementing the essence of the present disclosure, excluding components used only to improve performance, and a structure that includes only essential components excluding optional components used only to improve performance is also included in the scope of the present disclosure.

Hereinafter, embodiments of the present disclosure will be described in detail with reference to the drawings. In describing the embodiments of the present specification, if it is determined that a detailed description of a related known configuration or function may obscure the gist of the present specification, the detailed description is omitted. The same reference numerals refer to the same components in the drawings, and redundant descriptions of the same components are omitted.

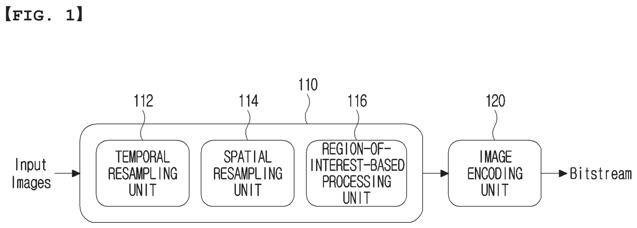

FIG. 1 is a block diagram of a video encoder according to an embodiment of the present disclosure.

Referring to FIG. 1, the video encoder may include a preprocessor 110 and an image encoder 120.

The preprocessor 110 performs a preprocessing process to convert input original images into images suitable for image encoding. Here, images input to the preprocessor 110 may be color or black-and-white images conforming to the YUV or YCbCr format.

The preprocessor 110 may include at least one of a temporal resampler 112, a spatial resampler 114, or a region-of-interest-based processor 116.

The temporal resampler 112 temporally resamples images. Only resampled images can be selected for image encoding. That is, encoding of some of the images input to the preprocessor 110 may be omitted through temporal resampling.

The spatial resampler 114 spatially resamples images. The size and/or spatial resolution of an image may be reduced through spatial resampling.

The region-of-interest-based processor 116 sets a region of interest in an image such that image encoding/decoding is performed focusing on information important to machine inference tasks. The region-of-interest-based processor 116 may crop the image such that the image includes the region of interest and sets only the cropped image as an encoding/decoding target, or adjust the size of the region of interest in the image (e.g., enlarges the region of interest) such that the region of interest is encoded/decoded with high quality.

The image encoder 120 encodes the image output from the preprocessor 110. Meanwhile, the image encoder 120 may encode the image using typical codec technology. As an example, the image encoder 120 may encode the image based on HEVC, VVC, or AV1. As a result of image encoding, a bitstream is generated and the generated bitstream may be transmitted to a video decoder.

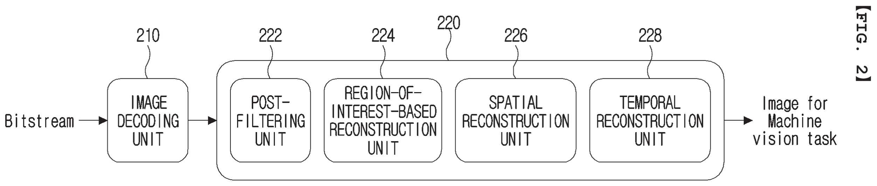

FIG. 2 is a block diagram of a video decoder according to an embodiment of the present disclosure.

Referring to FIG. 2, the video decoder may include an image decoder 210 and a post-processor 220.

The image decoder 210 decodes a bitstream received from the video encoder 110 to generate a decoded or reconstructed image. The image decoder 210 may decode the bitstream based on the codec technology used in the image encoder 120.

The post-processor 220 performs post-processing on the decoded image. Through post-processing, the size and frame rate of the image can be restored to match the original image.

The post-processor 220 may include at least one of a post-filtering unit 222, a region-of-interest-based reconstruction unit 224, a spatial reconstruction unit 226, or a temporal reconstruction unit 218.

The post-filtering unit 222 applies filtering to reduce a reconstruction error of a decoded image. For example, the post-filtering unit 222 may apply an in-loop filter to the decoded image. The in-loop filter may include at least one of a deblocking filter, a sample adaptive offset filter, a luma mapping chroma scaling (LMCS) filter, or an adaptive loop filter.

The region-of-interest-based reconstruction unit 224 obtains an image of the same size as an original image based on region-of-interest information. For example, when a cropped image is encoded such that a region of interest is included therein, the decoded image has a different size from the original image. Accordingly, the region-of-interest-based reconstruction unit may adjust the retargeted image to the original size. Here, the retargeted image may represent a decoded image or an image on which upscaling has been performed through the spatial reconstruction unit 226. Alternatively, when the size or position of a region of interest in an encoding target image has been adjusted, the region of interest-based reconstruction unit 224 may adjust the position and size of the region of interest in the retargeted image to match the original image.

The spatial reconstruction unit 226 performs upscaling on a decoded image. The decoded image can be reconstructed to be an image having the same size and/or spatial resolution as the original image through upscaling.

The temporal reconstruction unit 228 reconstructs an image at a temporal position where encoding/decoding has been omitted through temporal resampling. Specifically, the temporal reconstruction unit 228 may generate an image at a temporal position where encoding/decoding has been omitted through interpolation between decoded images.

Meanwhile, in order to perform reverse processing on the image processing performed in the preprocessor 110, additional information may be encoded and signaled. The post-processor 220 may perform post-processing on decoded images based on the additional information to generate images for machine inference. The additional information may be referred to as "metadata".

Metadata may include at least one of temporal resampling information, spatial resampling information, or region-of-interest processing information.

The temporal resampling information may include at least one of a flag indicating whether temporal resampling has been performed or information indicating a temporal resampling rate.

For example, the flag indicates that temporal resampling has been performed when set to 1. In this case, information indicating a temporal resampling rate may be additionally encoded/decoded. When temporal resampling is performed, fewer images than the number of original images may be encoded/decoded. The video decoder may reconstruct images for which encoding/decoding has been omitted through temporal reconstruction.

On the other hand, the flag indicates that temporal resampling has not been performed when set to 0.

The temporal resampling rate may be represented as an exponent of 2. For example, a temporal resampling rate of $2^N$ indicates that one of $2^N$ images is selected as an encoding/decoding target image. For example, only images having a picture order count (POC) of a multiple of $2^N$ can be encoded/decoded. Information representing the temporal resampling rate may represent the exponent (i.e., N) of the temporal resampling rate. As an example, the information may represent the exponent value of the temporal resampling rate or the value obtained by subtracting 1 from the exponent value.

The spatial resampling information may include at least one of a flag indicating whether spatial resampling has been performed or information indicating a scaling parameter for spatial resampling.

As an example, the flag indicates that spatial resampling has been performed when set to 1. In this case, information representing a scaling parameter may be additionally encoded. Specifically, each of information representing a scaling parameter for a horizontal direction and information representing a scaling parameter for a vertical direction may be encoded and signaled. When spatial resampling is performed, the size and/or spatial resolution of an image can be reduced. The video decoder may restore the size of a decoded image to the size of the original image or a pre-defined size through spatial reconstruction. Meanwhile, information for specifying the pre-defined size may be additionally encoded/-decoded.

The flag indicates that spatial resampling has not been performed when set to 0.

The region-of-interest processing information may include at least one of image size information and region-of-interest information.

The image size information may include information indicating whether retargeting has been performed. If the retargeting flag is 1, it indicates that the retargeted image is encoded/decoded instead of the original image. On the other hand, if the retargeting flag is 0, it indicates that the original image is encoded/decoded as is.

The retargeted image indicates an image generated by performing at least one of resolution adjustment and position adjustment on at least one region of interest in the original image. Accordingly, the resolution or position of the region of interest in the retargeted image may be different from that of the original image. In addition, the size of the retargeted image may be the same as or smaller than that of the original image.

If retargeting is allowed (i.e., if the retargeting flag is 1), the size information of the retargeted image may be encoded/decoded. The size information of the retargeted image may include width information of the image and height information of the image.

Meanwhile, information indicating the size difference between the original image and the retargeted image may be additionally encoded/decoded. For example, information indicating whether the size difference between the size of the retargeted image and the size difference of the original image is encoded/decoded may be encoded/decoded.

For example, when information, indicating whether the size difference, is encoded/decoded is 0, it indicates that the size difference between the retargeted image and the original image is not encoded/decoded.

On the other hand, when information, indicating whether the size difference is encoded/decoded, is 1, it indicates that the size difference between the retargeted image and the original image is encoded/decoded differently. In this case, information indicating the size difference between the size of the retargeted image and the size difference of the original image may be additionally encoded/decoded.

The information representing the size difference indicates the size difference between the original image and the retargeted image. Information representing a size difference in the horizontal direction and information representing a size difference in the horizontal direction may be encoded and signaled.

The region-of-interest information may include at least one of a flag indicating whether a region of interest is present, information on the number of regions of interest, a scaling parameter of a region of interest, or position information of a region of interest.

For example, the flag indicates that information on a region of interest is encoded/decoded when set to 1. In this case, at least one of the number of regions of interest, scaling parameter information of a region of interest, position information of a region of interest, or size information of a region of interest may be additionally encoded/decoded.

On the other hand, the flag indicates that a region of interest is not present when set to 0.

The information on the number of regions of interest indicates the number of regions of interest. Meanwhile, the number of regions of interest may be calculated in units of image groups including at least one image.

A scaling parameter of a region of interest represents the scaling parameter with respect to the region of interest. Depending on the scaling parameter of the region of interest, the size of the region of interest may be adjusted.

Scaling parameter information of a region of interest may include information indicating whether the scaling parameter of the region of interest is updated. If the information indicating whether the region of interest is updated indicates that the scaling parameter of the region of interest is not updated, the scaling parameter of the region of interest may be set to a default value or the same value as in the previous frame. On the other hand, when the information indicating whether the region of interest is updated indicates that the scaling parameter of the region of interest needs to be updated, the information indicating the scaling parameter of the region of interest may be additionally encoded/decoded.

Scaling parameter information of a region of interest may be encoded/decoded individually for each region of interest.

Position information of a region of interest indicates the position of the region of interest in the original image. The horizontal position (i.e., x-axis coordinate) information and vertical position (i.e., y-axis coordinate) information of the region of interest may be encoded/decoded.

Size information of a region of interest indicates the size of the region of interest in the original image. The horizontal size (i.e., width) information and the vertical size (i.e., height) information of the region of interest may be encoded/decoded.

Based on the above description, the video encoding/decoding method/device according to the present disclosure will be described in detail.

The present disclosure proposes a method of determining an optimal spatial resolution that does not impede machine inference performance for each image frame and adaptively performing spatial resampling based thereon. Specifically, an image compression rate can be improved while maintaining machine inference task performance through spatial resampling proposed in the present disclosure.

The present disclosure proposes a machine-inference reference picture resampling (MI-RPR) technique for resampling images to various resolutions based on machine inference performance.

To perform a video encoding method according to the MI-RPR technique, the spatial resampler 114 and the image encoder 120 may be used. The spatial resampler may derive scaling parameters for adaptively adjusting the resolution of an image, and the image encoder 120 may encode a scaled image and generate a reconstructed image.

Meanwhile, scaling parameters may include a scale factor.

Scaling parameters may be derived based on an object occupancy distribution (OOD) in an image.

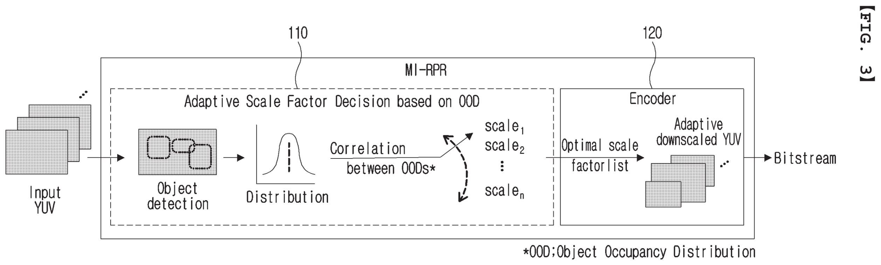

FIG. 3 is a conceptual diagram of adaptive determination of scaling parameters based on OOD through the MI-RPR technique.

Specifically, in FIG. 3, the rectangular area indicated by a dotted line represents a configuration for adaptively determining scaling parameters based on OOD.

OOD represents a distribution of proportions occupied by objects in an image. Specifically, when the MI-RPR technique is applied, for an input image, the ratios between the total area of the image and the areas occupied by objects in the image are calculated. When a plurality of objects is present in an image, an occupied area proportion may be calculated for each of the plurality of objects. Thereafter, OOD, which represents the distribution of the occupied area proportions of the objects in the image, is derived. The process of generating OOD in this manner may be referred to as a preliminary analysis process.

Based on OOD, one of a plurality of scale factor candidates may be selected. A plurality of scale factor candidates may be predefined in an encoding device. As an example, the plurality of scale factor candidates may be (1, 0.9, 0.7, 0.5, 0.3). A scale factor of 1 indicates that the sizes of an input image and an output image are the same. A scale factor less than 1 indicates that the size of an output image is less than the size of an input image. For example, a scale factor of 0.7 indicates that the width and height of an image output through spatial resampling are reduced to 70% of the size of the original image.

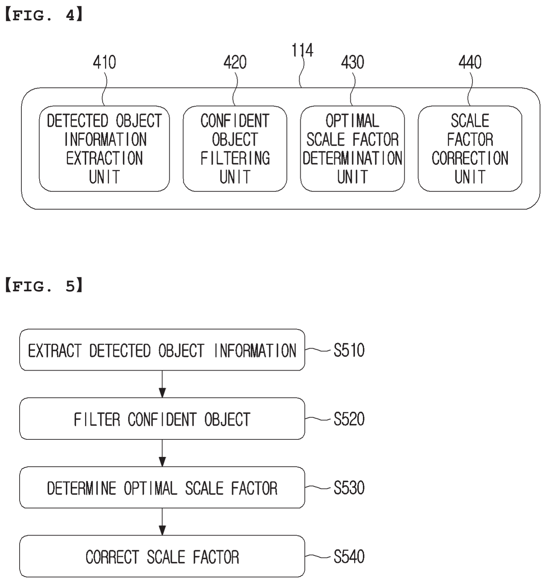

FIG. 4 shows the detailed configuration of the spatial resampler 114 for deriving scaling parameters of an image.

Referring to FIG. 4, the spatial resampler 114 may include at least one of a detected object information extraction unit 410, a confident object filtering unit 420, an optimal scale factor determination unit 430, and a scale factor correction unit 440.

Determination of a scale factor may be performed independently (i.e., on a frame-by-frame basis) for each image. In embodiments which will be described below, a current image represents an image that is a target of scaling factor determination.

The detected object information extraction unit 410 scales the current image based on each of scale factor candidates. A scaled image means an image generated by downsampling the current image according to the corresponding scale factor. As many scaled images as the number of scale factor candidates may be generated, and the scaled images may have different sizes.

Additionally, the detected object information extraction unit 410 may rescale the scaled image to the size of the original image. In other words, the rescaled image may mean an image obtained by downsampling the original image based on the scale factor for the scaled image, and then upscaling the downsampled image to the size of the original image.

Each of scaled images may be rescaled to the same size as the original image. Accordingly, as many rescaled images as the number of scale factor candidates may be generated.

The detected object information extraction unit 410 detects objects from the rescaled images and generates detected object information (DOI).

Detected object information may include the confidence of a detected object. The confidence of the detected object represents a confidence score for the object. Here, the confidence score represents the probability of presence of the detected object.

The confident object filtering unit 420 receives detected object information from the detected object information extraction unit and extracts only objects with high confidence. Filtered object information (FOI) may be generated as a result of extracting objects with high confidence by the confident object filtering unit 420.

The optimal scale factor determination unit 430 generates an OOD using the filtered object information and determines an optimal scale factor based on the OOD. Specifically, the optimal scale factor determination unit 430 may select one from among scaling factor candidates available for the current image.

The scale factor correction unit 440 may correct the scale factor determined by the optimal scale factor determination unit 430 according to additional information.

FIG. 5 is a flowchart of a process of deriving a scale factor.

According to the configuration of the spatial resampler 114 shown in FIG. 4, the method of deriving a scale factor of an image may include extracting a detected object information S510, filtering a confident object S520, determining an optimal scale factor S530, and correcting a scale factor S540.

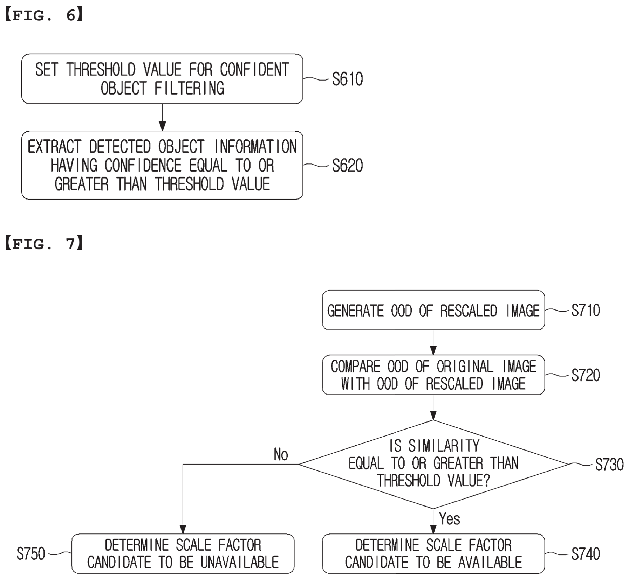

FIG. 6 to FIG. 8 show detailed operations of the steps shown in FIG. 5.

FIG. 6 is a flowchart showing the detailed operation of filtering the confident object S520.

A threshold value for confident object filtering may be set to the confident object filtering unit 420 (S610). Specifically, objects detected from an original image may be sorted in order of confidence, and a threshold value may be set based on the confidence of an object selected according to the confidence order. Here, the selected object may be an object with the N-th confidence rank or an object with a confidence rank of the top M%. Here, N or M may be predefined in the encoding device. Alternatively, N or M may be adaptively determined depending on the number of objects in the original image.

Alternatively, the threshold value may be set based on the confidence of an object detected from a rescaled image.

The threshold value may be set equal to the confidence of the selected object. For example, if the confidence of the selected object is 0.56, the threshold value may also be set to 0.56.

Alternatively, the average or median of the confidences of a plurality of objects may be set as the threshold value. Here, the plurality of objects may represent all objects in the original image, N objects selected in order of confidence in the original image, or objects with confidence in the top M%.

Alternatively, the threshold value may be predefined in the encoding device.

The DOI input to the confident object filtering unit 420 may include not only information on an object detected as an object with high confidence but also information on an object detected as an object with low confidence. Even if information on an object detected as an object with low confidence is not preserved during a compression process, the information has a minimal impact on the machine task processing performance. Accordingly, the confident object filtering unit 420 may extract only information having confidence equal to or greater than the threshold value among the detected object information generated based on the rescaled image (S620). In other words, information having confidence equal to or greater than the threshold value may be derived as filtered object information. On the other hand, detected object information having confidence lower than the threshold value may be discarded during a filtering process. Equation 1 represents a function F(obj, θ) for extracting information having confidence equal to or greater than the threshold value.

[Equation 1]

$$F(obj, \theta) = \{obj / \forall obj \in \mathbb{D}, CS(obj) > \theta\}$$

In Equation 1, obj represents an object in an image, and θ represents the threshold value. CS(obj) represents the confidence of the object obj. D can be defined by equation 2 below.

[Formula 2]

$$\mathbb{D} = DOIs = \{DOI(x) | \forall x \in SCL\}$$

In Equation 2, DOI(x) represents detected object information detected from an image to which a scale factor x has been applied (i.e., a rescaled image). SCL represents a scale factor list. That is, D represents all detected object information in the rescaled image.

For example, when the threshold value is 0.56, among detected object information for respective objects, detected object information with confidences of 0.56 or higher may be used to determine a scale factor. On the other hand, detected object information with confidences lower than 0.56 is removed through filtering and is not used to determine a scale factor.

Obtaining filtered object information may be represented by Equation 3 below.

[Equation 3]

$$FOIs_\theta = \{F(obj, \theta\} \neq \emptyset$$

In Formula 3, F(obj, θ) represents detected object information with confidence higher than the threshold value. $FOIs_\theta$ represents a set of detected object information with confidence higher than the threshold value θ.

Detected object information maintained through filtering may be transmitted to the optimal scale factor determination unit 430 and used to select a scale factor.

If there is no detected object information higher than the threshold value, the detected object information detected from the rescaled image may be determined to be unconfident. Accordingly, a scale factor used to generate a rescaled image in which no detected object information higher than the threshold value is present may be set to be unavailable for the current image.

The fact that there is no detected object information higher than the threshold value among detected object information extracted from an image to which the largest scale factor has been applied (e.g., an unscaled image, i.e., an image to which a scale factor of 1 has been applied) can be understood as meaning that confident detected object information cannot be extracted from the current image. Accordingly, the smallest scale factor may be applied to the current image. That is, the current image can be downsampled with the smallest scale factor and encoded.

FIG. 7 is a flowchart showing the detailed operation of the optimal scale factor determination step S530.

The optimal scale factor determination unit 430 receives filtered object information of a scaled image and generates an OOD for the rescaled image based thereon (S710). The process of generating an OOD for a rescaled image may be represented by Equation 4 below.

$$[Equation\ 4]$$

$$OODs = \{O(FOIs)\}$$

O represents a function for generating the OOD of an input. O(FOIs) represents that an OOD of filtered object information FOIs is generated for each scale factor. In other words, OODs mean OODs for all scale factors.

Then, a similarity between the OOD for the original image and the OOD for the rescaled image is calculated (S720).

Whether the similarity between the OOD for the original image and the OOD for the rescaled image is equal to or greater than the threshold value (S730). A scale factor for which the similarity is equal to or greater than the threshold value may be determined to be available for the current image, and a scale factor for which the similarity value is less than the threshold value may be determined to be unavailable for the current image (S740 and S750).

That is, if the OOD of objects detected from a rescaled image to which a specific scale factor has been applied is similar to the OOD of objects detected from the original image, results of inference task processing in a machine can be expected to be similar to those obtained using the original image even if the rescaled image is used. Accordingly, the scale factor candidate used to generate the rescaled image may be determined to be available for the current image.

The availability of each of a plurality of scale factor candidates may be determined by performing the processes shown in FIG. 5 and FIG. 6 on each rescaled image. If there is a plurality of available scale factor candidates, a scale factor corresponding to the one with the highest similarity among the rescaled images can be selected.

Alternatively, if the similarity difference between the image with the highest similarity and the next-ranked image among the rescaled images is less than the threshold value, the smaller scale factor between the two scale factor candidates corresponding to the two images may be selected.

Alternatively, the scale factor having the smallest value among available scale factor candidates may be selected.

On the other hand, if there are no available scale factor candidates, that is, if there is no image with a similarity equal to or greater than the threshold value among the rescaled images, the scale factor having the smallest value among the scale factor candidates predefined in the current image (i.e., unavailable scale factor candidates) may be selected.

The similarity between the OOD for the original image and the OOD for a rescaled image may be derived based on the cross-correlation between the two OODs. For example, as the cross-correlation between the two OODs is closer to 1, they may be determined to be similar. As an example, determining whether or not a scale factor candidate is available based on cross-correlation may be represented by Equation 5 below.

$$[Equation\ 5]$$

$$\{x | x \in CSL, COrr(OOD_{100}, OOD_x) > \Upsilon\}$$

In Equation5, $OOD_x$ represents an OOD when the scale factor is x. As an example, $OOD_{100}$ represents the OOD of the original image. Corr $(OOD_{100}, OOD_x)$ represents the correlation between the OOD of the original image and the OOD of a rescaled image based on the scale factor x. $\gamma$ represents the threshold value.

Meanwhile, instead of calculating the similarity between the ODD for the original image and the ODD for the rescaled image, the similarity between the ODD for a scaled image and the ODD for the original image may be calculated to determine whether or not a scale factor is available.

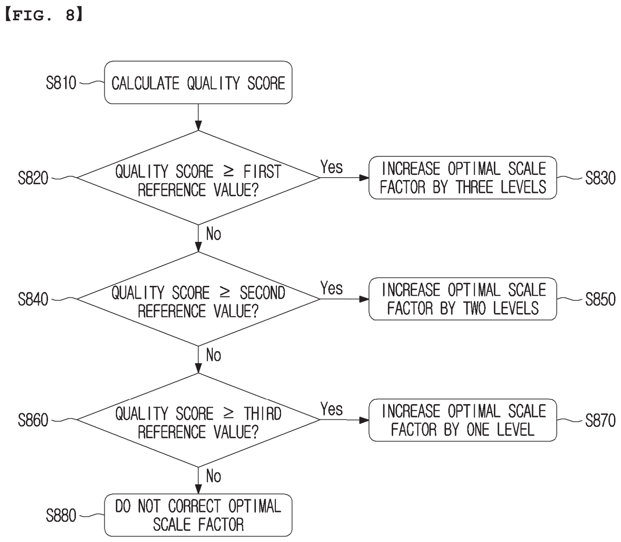

FIG. 8 is a flowchart of a process of correcting a scale factor.

The scale factor correction unit 440 corrects the scale factor determined by the optimal scale factor determination unit 430 and outputs a final scale factor. Correction of the scale factor may be based on a quality score.

To this end, the scale factor correction unit 440 may calculate a quality score (S810). The quality score may be calculated based on at least one of a quantization parameter, an average occupied area ratio (OAR) of objects detected in an original image or a rescaled image, or the resolution of the original image used in video encoding. As an example, the quality score may be derived by Equation 6 below.

[Equation 5]

$$Quality\ score\ =\ QP\ score\ +\ Scale\ score\ +\ OAR\ score\ +\ Resolution\ score$$

In Equation 5, QP score, Scale score, OAR score, and Resolution score may be scores of a quantization parameter, a scaling factor, an average OAR of objects detected in an image, and the resolution of the original image.

In calculating the quality score, at least one of the degree of overlap of objects or movement speeds of objects may be further considered.

FIG. 8 illustrates that three reference values $\tau 1$, $\tau 2$, and $\tau 3$ are used to correct the scaling factor. As an example, a quality score equal to or greater than the first reference value $\tau 1$ may indicate that machine inference task performance is not maintained due to high quantization strength or high downsampling strength. Accordingly, if the quality score is equal to or greater than the first reference value $\tau 1$ (S820), the scale factor may be increased by three levels (S830).

On the other hand, if the quality score is less than the first reference value $\tau 1$ and equal or greater than the second reference value $\tau 2$ (S840), the scale factor may be increased by two levels (S850).

If the quality score is less than the second reference value $\tau 2$ and equal to or greater than the third reference value $\tau 3$ (S860), the scale factor may be increased by one level (S870).

If the quality score is less than the third reference value $\tau 3$ (S860), the input scale factor may be output as the final scale factor without performing scale factor correction (S880).

In the above-described example, it is assumed that the first, second, and third reference values are 8, 6, and 4. In this case, if the quality score is 7, the scale factor may be increased by two levels.

Stepwise increase in a scale factor may mean selecting a scale candidate having a higher value than the current scale factor among all scale factor candidates. For example, increasing the current scale factor by N levels means that, when scale candidates having values greater than the current scale factor among scale factor candidates are arranged in ascending order, the current scale factor is replaced with the N-th scale factor candidate among the scale factor candidates arranged in ascending order.

Alternatively, stepwise increase in a scale factor may be determined according to a predefined offset size. For example, when the predefined offset is 0.05, increasing a scale factor by N levels indicates that the current scale factor is updated to a value larger than the current scale factor by 0.05*N.

FIG. 8 shows an example of correcting a scale factor based on three reference values. However, a scale factor may be corrected using more reference values or fewer reference value(s).

Depending on the value of the scale factor selected by the optimal scale factor determination unit 430, it may be determined whether to perform scale factor correction. For example, when the optimal scale factor determination unit 430 selects a scale factor candidate having the largest value among a plurality of scale factor candidates, or when the value of the selected scale factor is greater than the threshold value, scale factor correction may not be performed.

According to the above description, by using the MI-RPR technique, the optimal scale factor for the current image may be adaptively derived. However, if an object is rarely detected in the image, the effectiveness of selecting a scale factor using the MI-RPR technique may be reduced.

Accordingly, if the number of frames in which an object is not detected is equal to or greater than a threshold value for all images or a predetermined image group, images may be encoded without performing spatial resampling. Here, the predetermined image group may represent a predetermined number of images or images within an intra period.

On the other hand, when the number of frames in which an object is not detected is less than the threshold value, a scale factor may be adaptively determined according to the MI-RPR technique proposed in the present disclosure.

By using the MI-RPR technique according to the present disclosure, the image encoder 120 may encode and signal a scaled image. By encoding a scaled image that is smaller than the original image, the size of compressed data may be reduced.

The image decoder 210 may decode the scaled image to generate a decoded image.

Meanwhile, in consideration of compatibility with other functional units in the machine, it is necessary to match the resolution of the image finally output from the video decoder (i.e., the image for performing a machine inference task) to the resolution of the original image. To this end, the decoded image output from the image decoder 210 may be set to have the same size as the original image. If the size of the decoded image matches the original image, upscaling in the post-processor 220 may be omitted.

Alternatively, the image decoder 210 may generate decoded images in accordance with a scaled image size. In this case, depending on scale factors of the decoded images, the decoded images may have different sizes.

If the size of a decoded image is different from the size of the original image, the post-processor 220 may obtain an image of the same size as the original image by upscaling the decoded image. Here, upscaling may mean upsampling an image (i.e., applying an upsampling filter).

In order to perform upsampling in the post-processor 220, the image encoder 210 may encode and signal spatial resampling information. Tables 1 to 3 show examples of spatial resampling information.

First, Table 1 shows an example in which spatial resampling information is encoded/decoded through a spatial resampling set (spatial_resampling_set).

[Table 1]

| spatial_resampling_set() { | Descriptor |
|---|---|
| vcm_based_upscaling_flag | u (1) |
| } | |

Spatial resampling information may include information indicating whether upscaling of a decoded image is required. As an example, in Table 1, vcm_based_upscaling_flag indicates whether it is necessary to perform upsampling on a decoded image.

For example, when vcm_based_upscaling_flag is 0, it indicates that upscaling for a decoded video is not necessary. That is, when vcm_based_upscaling_flag is 0, it may indicate that the size of a decoded image is the same as the size of the original image. This indicates that upscaling has been performed in the image decoder 210 or that spatial resampling has not been performed on the current image.

On the other hand, when vcm_based_upscaling_flag is 1, it indicates that upscaling for a decoded video is necessary. When vcm_based_upscaling_flag is 1, decoded images included in a YUV sequence output from the image decoder 210 may have various sizes/resolutions.

When vcm_based_upscaling_flag is 1, information for performing upsampling of a decoded image may be additionally encoded and signaled in the post-processor 220. As an example, information on an upsampling method may be additionally encoded/decoded within the spatial_resampling_set syntax structure.

Alternatively, as shown in Tables 2 and 3, spatial resampling information may be encoded and signaled. Table 2 shows a syntax structure at a sequence level, and Table 3 shows a syntax structure at a picture level.

Based on spatial resampling information encoded/decoded at the sequence and/or frame level illustrated in Tables 2 and 3, upsampling may be performed on a decoded image.

[Table 2]

| sequence_spatial_resampling_set () { | Descriptor |
|---|---|
| vcm_based_upscaling_flag | u (1) |
| if (vem_based_upscaling_flag) { | |
| original_pic_width | u (5) |
| original_pic_height | u (5) |
| upscaling_method_idx | u (2) |
| } | |
| } | |

When the value of vcm_based_upsacling_flag is 1, upscaling size information indicating the size of the downscaled image may be additionally encoded/decoded at the sequence level. Here, the upscaling size information indicates a target size for upsampling the downscaled image, and may be indicate the size of the original image. As an example, original_pic_width represents the width of the original image, and original_pic_height represents the height of the original image.

Alternatively, the downscaled image may be upscaled to a pre-defined size. The pre-defined size may be pre-defined in the encoder/decoder, or information indicating the pre-defined size may be additionally encoded/decoded.

When there is a plurality of upsampling methods supported by the video decoder, information for selecting one of the plurality of upsampling methods may be encoded and signaled. As an example, upscaling_method_idx indicates one of the plurality of upsampling methods. Decoded images may be upsampled based on an upsampling method indicated by upscaling_method_idx from a plurality of images referencing the corresponding sequence.

Meanwhile, upscaling_method_idx may also be encoded/decoded at the frame level. This indicates that an upsampling method is independently determined for each image.

[Table 3]

| frame_spatial_resampling_set() { | Descriptor |
| --- | --- |
| if (vem_based_upscaling flag) { | |
| pic_scale_factor | u(2) |
| } | |
| } | |

When vcm_based_upscaling_flag is 1, information indicating the scale factor of the current image may be encoded/decoded. As an example, the syntax pic_scale_factor represents the scale factor for the current image.

Table 3 shows that pic_scale_factor is encoded/decoded with a 2-bit fixed length (i.e., u(2)). As an example, the scale factor according to pic_scale_factor may be defined as shown in Table 4 below.

[Table 4]

| spatial_scale_factor | Value of scale factor |
| --- | --- |
| 00 | 0.9 |
| 01 | 0.7 |
| 10 | 0.5 |
| 11 | 0.3 |

Alternatively, the video decoder may encode/decode an index indicating one of a plurality of predefined scale factor candidates, for example, scale_factor_idx.

The video decoder may obtain the resolution of the currently decoded image based on the syntaxes original_pic_width, original_pic_height, and spatial_scale_factor. Thereafter, the video decoder may upsample the currently decoded image to the original resolution or a specific resolution through the upsampling technique specified by upscaling_method_idx.

Meanwhile, offset information for optimal scale factor and scale factor correction may be separately encoded and signaled. Here, information representing the optimal scale factor may represent one of a plurality of scale factor candidates, and the offset information may represent the difference between the final scale factor and the optimal scale factor.

If the optimal scale factor has the largest value among a plurality of scale factor candidates or is greater than the threshold value, encoding/decoding of the offset information may be omitted and the optimal scale factor may be set as the final scale factor.

A flag indicating whether correction for the optimal scale factor is performed may be encoded and signaled. Only when the flag indicates that correction for the optimal scale factor is performed, can the offset information be encoded and signaled.

The offset information may be encoded/decoded for each frame.

The names of syntax elements introduced in the above-described embodiments are merely given temporarily to describe the embodiments according to the present disclosure. Syntax elements may be named differently from those suggested in the present disclosure.

Components described in the embodiments of the present disclosure may be implemented by hardware elements. For example, the hardware elements may include at least one of a digital signal processor (DSP), a processor, a controller, an application specific integrated circuit (ASIC), a programmable logic element such as an FPGA, a GPU, other electronic devices, or a combination thereof. At least some of the functions or processes described in the embodiments of the present disclosure may be implemented as software, and the software may be recorded on a recording medium. Components, functions, and processes described in the embodiments may be implemented by a combination of hardware and software.

The method according to an embodiment of the present disclosure may be implemented as a program that can be executed by a computer, and the computer program may be recorded in various recording media such as magnetic storage media, optical read-only media, and digital storage media.

The various techniques described in the present disclosure may be implemented as digital electronic circuits or computer hardware, firmware, software, or a combination thereof. The above-described techniques may be implemented by a computer program product, i.e., a computer program tangibly embodied in an information medium (e.g., a machine-readable storage device (e.g., a computer-readable medium) or a data processing device), or a computer program implemented as propagated signals for processing or operation of a data processing device (e.g., a programmable processor, a computer, or a plurality of computers).

Computer program(s) may be written in any form of programming language, including compiled or interpreted languages, and may be distributed in any format including stand-alone programs or modules, components, subroutines, or other units suitable for use in a computing environment. A computer program may be executed by a single computer or by multiple computers distributed at one site or multiple sites and interconnected by a communications network.

Examples of processors suitable for executing computer programs include general-purpose and special-purpose microprocessors, and one or more processors in digital computers. Typically, a processor receives instructions and data from a read only memory, a random access memory, or both. Components of a computer may include at least one processor for executing instructions and one or more memory devices for storing instructions and data. Additionally, the computer may include one or more mass storage devices for data storage, such as magnetic disks, magneto-optical disks, or optical discs, or may be connected to the mass storage devices to receive and/or transmit data. Examples of information media suitable for embodying computer program instructions and data include semiconductor memory devices (e.g., magnetic media such as hard disks, floppy disks, and magnetic tapes), optical media such as a compact disc read-only memory (CD-ROM) and digital video discs (DVDs), magneto-optical media such as floptical disks, a read only memory (ROM), a random access memory (RAM), a flash memory, an erasable programmable ROM (EPROM), an electrically erasable programmable ROM (EEPROM), and other known computer-readable media. Processors and memories can be supplemented or integrated by special-purpose logic circuits.

A processor may run an operating system (OS) and one or more software applications that run on the OS. A processor device may access, store, operate, process and generate data in response to software execution. For simplicity, the processor device is described as a single device, but those skilled in the art will understand that the processor device may include a plurality of processing elements and/or various types of processing elements. For example, a processor device may include a plurality of processors or a processor and a controller. Additionally, different processing structures, such as parallel processors, may be configured. Further, computer-readable media refer to all media that a computer can access, and may include both computer storage media and transmission media.

Although the present disclosure includes detailed descriptions of various detailed implementation examples, the details should not be construed as limiting the disclosure or scope of the claims proposed in the present disclosure, but rather illustrating features of specific exemplary embodiments.

Features individually described in the embodiments in the present disclosure may be implemented by a single embodiment. Conversely, various features described in the present disclosure with respect to a single embodiment may be implemented by a combination or appropriate sub-combination of a plurality of embodiments. Furthermore, in the present disclosure, the features may operate by a specific combination, and the combination may initially be described as claimed, however, in some cases, one or more features may be excluded from the claimed combination, or the claimed combination may be changed to a sub-combination or a modified form of the sub-combination.

Likewise, even if operations are depicted in a specific order in the drawings, it should not be understood that execution of the operations in a specific order or sequence is necessary, or that performance of all operations is required to obtain a desired result. In certain cases, multitasking and parallel processing can be useful. Additionally, it should not be understood that, in all embodiments, various device components are necessarily separate, and the above-described program components and devices may be packaged in a single software product or multiple software products.

The exemplary embodiments disclosed herein are illustrative and are not intended to limit the scope of the present disclosure. Those skilled in the art will recognize that various modifications may be made to the exemplary embodiments without departing from the spirit and scope of the claims and their equivalents.

Accordingly, the present disclosure is intended to include all other substitutions, modifications and changes that fall within the scope of the following claims.

**[Industrial Applicability]**

Embodiments according to the present disclosure may be applied to an electronic device capable of encoding/decoding an image.

**Claims**

**1.** A method of encoding a video, comprising:

determining a scale factor for a current picture;
scaling the current picture according to the scale factor; and
encoding the scaled picture,

wherein a bitstream includes picture data obtained by encoding the scaled picture and metadata including spatial resampling information related to the scale factor.

2. The method of claim 1, wherein determining a scale factor comprises selecting an optimal scale factor from a plurality of scale factor candidates.

3. The method of claim 2, wherein a first rescaled picture is obtained by scaling and rescaling the current picture based on a first scale factor candidate among the plurality of scale factor candidates, and whether the first scale factor candidate is available for the current picture is determined based on an object occupancy distribution (OOD) of the first rescaled picture.

4. The method of claim 3, wherein the object occupancy distribution is derived based on filtered detected object information obtained by filtering a plurality of pieces of detected object information obtained from the first rescaled picture.

5. The method of claim 4, wherein the filtering comprises selecting detected object information having a confidence equal to or greater than a threshold value from the plurality of pieces of detected object information.

6. The method of claim 4, wherein whether the first scale factor candidate is available for the current picture is determined by comparing a correlation between the object occupancy distribution of the first rescaled picture and an object occupancy distribution of an original picture or a rescaled picture with a threshold value.

7. The method of claim 6, wherein the first rescaled picture is obtained by downsampling the original picture according to the first scale factor candidate, and then upsampling the downsampled picture to a size of the original picture.

8. The method of claim 2, wherein, when there is a plurality of scale factor candidates available for the current picture among the plurality of scale factor candidates, a scale factor candidate having a smallest value among the plurality of available scale factor candidates is set as the optimal scale factor.

9. The method of claim 2, wherein, when there is no scale factor candidate available for the current picture among the plurality of scale factor candidates, the scale factor candidate having the smallest value among the plurality of scale factor candidates is selected as the optimal scale factor.

10. The method of claim 2, wherein the scale factor is obtained by correcting the optimal scale factor.

11. The method of claim 10, wherein whether the correction is performed is determined by comparing a quality score for the rescaled picture with a reference value.

12. The method of claim 1, wherein the spatial resampling information includes a flag, indicating whether a picture is scaled or not, encoded at a sequence level.

13. The method of claim 12, wherein, when the flag is encoded into a value indicating that picture scaling has been performed, information indicating a scale factor of each picture is encoded at a picture level.

14. A method of encoding a video, comprising:

decoding a current picture from a bitstream; and
determining whether to perform upscaling on the decoded picture based on spatial resampling information decoded from the bitstream,
wherein, the decoded picture is upsampled based on a scale factor for the current picture upon determining that upscaling is performed on the decoded picture.

15. The method of claim 14, wherein the spatial resampling information includes a flag, indicating whether to scale a picture, decoded at a sequence level.

16. The video decoding method of claim 15, wherein, when the flag indicates that picture scaling is performed, information indicating the scale factor of the current picture is decoded at a picture level.

17. A computer-readable recording medium storing a video encoding method comprising:

   determining a scale factor for a current picture;
   scaling the current picture according to the scale factor; and
   encoding the scaled picture,
   wherein a bitstream includes picture data obtained by encoding the scaled picture and metadata including spatial resampling information related to the scale factor.

【FIG. 1】

[FIG. 2]

Bitstream → IMAGE DECODING UNIT (210) → POST-FILTERING UNIT (222) | REGION-OF-INTEREST-BASED RECONSTRUCTION UNIT (224) | SPATIAL RECONSTRUCTION UNIT (226) | TEMPORAL RECONSTRUCTION UNIT (228) (220) → Image for Machine vision task

【FIG. 3】

【FIG. 4】

410　　　　　　　420　　　　114　430　　　　　　440

| DETECTED OBJECT INFORMATION EXTRACTION UNIT | CONFIDENT OBJECT FILTERING UNIT | OPTIMAL SCALE FACTOR DETERMINATION UNIT | SCALE FACTOR CORRECTION UNIT |

【FIG. 5】

EXTRACT DETECTED OBJECT INFORMATION — S510

↓

FILTER CONFIDENT OBJECT — S520

↓

DETERMINE OPTIMAL SCALE FACTOR — S530

↓

CORRECT SCALE FACTOR — S540

【FIG. 6】

```
┌─────────────────────────────────┐
│  SET THRESHOLD VALUE FOR CONFIDENT │ ── S610
│       OBJECT FILTERING             │
└─────────────────────────────────┘
                │
                ▼
┌─────────────────────────────────┐
│  EXTRACT DETECTED OBJECT INFORMATION │ ── S620
│   HAVING CONFIDENCE EQUAL TO OR    │
│    GREATER THAN THRESHOLD VALUE    │
└─────────────────────────────────┘
```

【FIG. 7】

```
┌─────────────────────────────────┐
│  GENERATE OOD OF RESCALED IMAGE  │ ── S710
└─────────────────────────────────┘
                │
                ▼
┌─────────────────────────────────┐
│  COMPARE OOD OF ORIGINAL IMAGE   │ ── S720
│    WITH OOD OF RESCALED IMAGE    │
└─────────────────────────────────┘
                │
                ▼
            ╱─────────────╲
   No      ╱ IS SIMILARITY  ╲
◄─────────  EQUAL TO OR GREATER THAN  ── S730
           ╲ THRESHOLD VALUE? ╱
            ╲─────────────╱
   │                  │ Yes
   ▼                  ▼
┌──────────────────┐  ┌──────────────────┐
│ DETERMINE SCALE FACTOR │ │ DETERMINE SCALE FACTOR │
│ CANDIDATE TO BE UNAVAILABLE │ │ CANDIDATE TO BE AVAILABLE │
└──────────────────┘  └──────────────────┘
  S750                   S740
```

【FIG. 8】

S810 — CALCULATE QUALITY SCORE

S820 — QUALITY SCORE ≥ FIRST REFERENCE VALUE? — Yes → INCREASE OPTIMAL SCALE FACTOR BY THREE LEVELS — S830

No

S840 — QUALITY SCORE ≥ SECOND REFERENCE VALUE? — Yes → INCREASE OPTIMAL SCALE FACTOR BY TWO LEVELS — S850

No

S860 — QUALITY SCORE ≥ THIRD REFERENCE VALUE? — Yes → INCREASE OPTIMAL SCALE FACTOR BY ONE LEVEL — S870

No

S880 — DO NOT CORRECT OPTIMAL SCALE FACTOR

## INTERNATIONAL SEARCH REPORT

| International application No. |
|---|
| **PCT/KR2024/009895** |

| A. | CLASSIFICATION OF SUBJECT MATTER |
|---|---|

**H04N 19/132**(2014.01)i; **H04N 19/20**(2014.01)i; **H04N 19/167**(2014.01)i; **H04N 19/70**(2014.01)i; **H04N 19/30**(2014.01)i; **H04N 19/85**(2014.01)i; **H04N 19/117**(2014.01)i; **H04N 19/105**(2014.01)i

According to International Patent Classification (IPC) or to both national classification and IPC

| B. | FIELDS SEARCHED |
|---|---|

Minimum documentation searched (classification system followed by classification symbols)

H04N 19/132(2014.01); G06N 3/0455(2023.01); G06N 3/0464(2023.01); G06T 1/20(2006.01); G06T 7/194(2017.01); H04N 19/119(2014.01); H04N 19/70(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 부호화(encoding), 복호화(decoding), 스케일(scale), 계수(coefficient), 공간적 (spatial), 리샘플링(resampling), 비트스트림(bitstream)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2022-0130562 A (ELECTRONICS AND TELECOMMUNICATIONS RESEARCH INSTITUTE et al.) 27 September 2022 (2022-09-27)<br>See paragraphs [0001], [0064], [0122]-[0123], [0127], [0133] and [0141]-[0143]; and figure 6. | 1-17 |
| Y | WANG, Shurun et al. AHG 8: A spatial resampling algorithm and an exemplar software implementation. JVET-AE0143-v1, Joint Video Experts Team (JVET) of ITU-T SG 16 WP 3 and ISO/IEC JTC 1/SC 29, 31st Meeting. Geneva, CH. pp. 1-5, 04 July 2023.<br>See pages 1-4; and figure 1. | 1-17 |
| Y | KR 10-2312338 B1 (SAMSUNG ELECTRONICS CO., LTD.) 14 October 2021 (2021-10-14)<br>See paragraphs [0165]-[0168], [0249] and [0251]. | 3-7,10-11 |
| Y | KR 10-2023-0072491 A (HUAWEI TECHNOLOGIES CO., LTD.) 24 May 2023 (2023-05-24)<br>See paragraphs [0031] and [0368]; and claim 1. | 8-9 |

| ✓ Further documents are listed in the continuation of Box C. | ✓ See patent family annex. |
|---|---|

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **25 October 2024** | **25 October 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2024/009895** |

| C. | DOCUMENTS CONSIDERED TO BE RELEVANT | |
|---|---|---|
| Category* | Citation of document, with indication, where appropriate, of the relevant passages | Relevant to claim No. |
| Y | KR 10-2023-0055488 A (ATINS INC.) 26 April 2023 (2023-04-26)<br>See claims 3 and 5. | 13,16 |

Form PCT/ISA/210 (second sheet) (July 2022)

**INTERNATIONAL SEARCH REPORT**
Information on patent family members

International application No.

**PCT/KR2024/009895**

| Patent document cited in search report | | | Publication date (day/month/year) | Patent family member(s) | | | Publication date (day/month/year) |
|---|---|---|---|---|---|---|---|
| KR | 10-2022-0130562 | A | 27 September 2022 | US | 2022-0301181 | A1 | 22 September 2022 |
| KR | 10-2312338 | B1 | 14 October 2021 | CN | 112715029 | A | 27 April 2021 |
| | | | | EP | 3811619 | A1 | 28 April 2021 |
| | | | | KR | 10-2020-0044668 | A | 29 April 2020 |
| KR | 10-2023-0072491 | A | 24 May 2023 | CN | 116648909 | A | 25 August 2023 |
| | | | | EP | 4226325 | A1 | 16 August 2023 |
| | | | | JP | 2024-500744 | A | 10 January 2024 |
| | | | | US | 2024-0015314 | A1 | 11 January 2024 |
| | | | | WO | 2022-128138 | A1 | 23 June 2022 |
| KR | 10-2023-0055488 | A | 26 April 2023 | KR | 10-2648652 | B1 | 18 March 2024 |

Form PCT/ISA/210 (patent family annex) (July 2022)